# EUROPÄISCHE PATENTSCHRIFT

(11) **EP 0 840 050 B1**
(45) Veröffentlichungstag und Bekanntmachung des Hinweises auf die Patenterteilung: **07.06.2000**
(21) Anmeldenummer: 97115157.6
(22) Anmeldetag: 02.09.1997
(51) Int. Cl.: F16L 25/00, F16L 37/084

(54) **Anschlussarmatur**
Connecting device
Dispositif de raccordement

(30) Priorität: 31.10.1996 DE 19643962
(43) Veröffentlichungstag der Anmeldung: 06.05.1998
(73) Patentinhaber: Anton Hummel Verwaltungs-GmbH, D-79183 Waldkirch (DE)
(72) Erfinder: Bauer, Gerhard, 74582 Gerabronn-Grossforst (DE)
(74) Vertreter: Schmitt, Hans, Dipl.-Ing.

(56) Entgegenhaltungen:
- DE-U- 29 611 947
- US-A- 5 285 013

## Beschreibung

Die Erfindung betrifft eine Anschlußarmatur gemäß dem Oberbegriff des Patentanspruches 1.

Es gibt viele Anschlußarmaturen zur Aufnahme und Befestigung von Wellschläuchen oder -Rohren an Armaturenträgern. Dabei sind vielfältige Anwendungsmöglichkeiten bekannt, beispielsweise die Befestigung von Wellschläuchen an Maschinengehäusen, Schaltschränken, Gehäusen ect., wobei die Wellschläuche vorzugsweise zur Ein- und Durchführung, Abdichtung, Zugentlastung oder Schutz-Verlegung von Leitungen, Kabeln oder Schläuchen eingesetzt werden. Die Wellschläuche bestehen insbesondere aus Kunststoff, können jedoch auch aus Metall hergestellt sein.

Zum Anschluß der Wellschläuche werden geeignete Anschlußarmaturen benötigt. Dabei sind eine Reihe von Anschlußarmaturen bekannt, die eine schnelle und sichere Befestigung des Wellschlauches an der Anschlußarmatur ermöglichen sollen. Hierfür sind viele mehr oder weniger geeignet gestaltete Rast- bzw. Schnapp- bzw. Feder- sowie -Schraub-Eingriffselemente bekanntgeworden.

Eine aus DE-U-296 11 947 bekannte Anschlußarmatur der eingangs genannten Art ist dabei mit einem Einschraubstutzen versehen. Dieser Einschraubstutzen muß in die hierfür vorgesehene Öffnung des meist dünnwandigen Gehäuses eingesteckt und anschließend von innen mit einer passenden Mutter festgeschraubt werden. Diese Vorgehensweise ist zeit- und montageaufwendig.

Wegen der erforderlichen Innenverschraubung muß die Verschraubungsstelle vom Gehäuseinneren her zugänglich sein. Die Zugänglichkeit ist jedoch oftmals erschwert, so daß die Öffnungen an Stellen besserer Zugänglichkeit gelegt werden müssen. Dies kann einerseits zu längeren Leitungswegen und damit zu unnötigen Kosten führen oder andererseits eine ungünstige, auch sicherheitsbeeinträchtigende Schlauchführung bedeuten.

Aus der US-A-5 285 013 ist eine Anschlußarmatur der eingangs genannten Art bekannt, die mittels nachgiebigen Rasten in eine Öffnung eines Gehäuses eingesteckt werden kann. Dabei entfällt zwar eine Innenverschraubung, jedoch ist die Verbindung gegen Zugkräfte von der Widerstandsfähigkeit der Rasten abhängig, die konstruktionsbedingt begrenzt ist.

Es besteht deshalb die Aufgabe, eine Anschlußarmatur der eingangs genannten Art zu schaffen, die bei günstigen Herstellungsverhältnissen eine verbesserte Montage mittels Zug- bzw. Druckbeaufschlagung des Schlauches ermöglicht.

Diese Aufgabe wird bei einer Anschlußarmatur mit den Merkmalen des Oberbegriffes des Patentanspruches 1 durch die im kennzeichnenden Teil des Patentanspruches 1 angegebenen Maßnahmen und Mittel gelöst.

Durch diese Merkmale und Maßnahmen ist es möglich, daß die Anschlußarmatur eine sichere Verbindung zum Armaturen-Träger und zum Schlauch bildend als von nur einer Seite des Armaturen-Trägers mittels Zug- bzw. Druckbeaufschlagung des Schlauches leicht und schnell anbringbar gestaltet ist.

Dadurch bedingt ist man bei der Auswahl der Position der vorzusehenden Gehäuseöffnungen nahezu völlig frei, so daß einerseits optimale Verhältnisse im Hinblick auf möglichst kurze Längen sowohl des Wellschlauches als auch der darin gegebenenfalls zu führenden beziehungsweise zu schützenden Leitungen, Kabeln oder Schläuchen gegeben ist und andererseits eine günstige Positionierung der Öffnungen und/oder der Wellschläuche im Hinblick auf die Zugänglichkeit von Anlagen oder Maschinenteilen sowie hinsichtlich sicherheitsrelevanter Aspekte möglich ist. Ferner ermöglichen diese Maßnahmen eine besonders einfache Handhabung bei der Montage sowie eine schnell und leicht herstellbare Befestigung der Anschlußarmatur mit dem Schlauch.

Da die Träger-Befestigungselemente mit außenumfangs- bzw. außendurchmesser-vergrößerbaren oder dehnungsringartigen Feder- und Fixierelementen gestaltet sind, ist bei leichter Herstellbarkeit eine schnelle und einfache Montierbarkeit sowie eine noch sichere Befestigung der Anschlußarmatur erzielbar. Weil die Träger-Befestigungselemente mit trägerseitigen Rast- bzw. Schnappverbindungselementen gestaltet sind, können die Montageverhältnisse weiter verbessert werden.

Vorteilhafterweise sind die Feder- und Fixierelemente jeweils erfindungsgemäß mit einem Dreigelenk-Scharnier mit zwischenliegenden Feder- und Fixierelement-Teilen gebildet. Dadurch kann in einfacher und kontrollierter Weise eine Durchmesser- bzw. Umfangsvergrößerung sowie eine besonders leichte Handhabbarkeit in Verbindung mit geringen Fügekräften erzielt werden.

Das Dreigelenk-Scharnier kann Filmscharniere aufweisen und sowohl die Filmscharniere als auch die Feder-und Fixierelement-Teile können einstückig mit einem Stützkörper und dem Stütz- und Anlagekörper verbunden sein. Dies erleichtert wiederum die Herstellung und auch die Montage. Beim Betätigen der Filmscharniere können die zwischen diesen liegenden Feder- und Fixierelement-Teile in jeweils entgegengesetzter Richtung schwenken, wobei eine Vergrößerung des Außenumfanges bzw. des Außendurchmessers des Feder- und Fixierelementes auftritt und eine entsprechende Klemm- bzw. Fixierwirkung zwischen dem Stützkörper und dem Stütz- und Anlagekörper erzielt werden kann.

Zweckmäßigerweise ist zumindest ein Feder- und Fixierelement-Teil mit einem auf die Lochrandgestaltung bzw. Dicke des Armaturen-Trägers angepaßten federelastischen Fixierelement gebildet. Dies ermöglicht die Verwendung einer Anschlußarmatur für Armaturen-Träger mit unterschiedlicher Dicke, so daß mit nur einer Anschlußarmatur ein bestimmter Dickenbereich der Armaturen-Träger abgedeckt werden kann. Dies führt zu geringeren Herstellungs- und Lagerkosten sowie zu vereinfachten Montageverhältnissen.

Wenn im Bereich des Stütz- und Anlagekörpers ein oder mehrere konzentrisch um die Längsachse bzw. Fügeachse angeordnete, sich etwa in Richtung der Fügeachse erstreckende federelastische Stützelemente vorgesehen sind, an denen die trägerseitigen Eingriffselemente einrasten können, ermöglicht dies ein leichtes und sicheres Einrasten sowie eine über den Umfang gleichmäßige und sichere Verbindung.

Zweckmäßigerweise sind die Schlauch-Angriffselemente und/oder die Träger-Befestigungselemente wieder lösbar gestaltet, so daß bei Bedarf der Schlauch in seine Länge veränderbar oder wieder entfernbar und/oder die Anschlußarmatur auswechselbar sind. Dies kann beispielsweise dadurch erreicht werden, daß die Träger-Befestigungselemente mit konzentrisch um die Längs- bzw. Fügeachse angeordneten Arretierelementen mit Außengewinde und einer aufschraubbaren Mutter gebildet sind.

Vorteilhafterweise ist die Anschlußarmatur als ein einziges Spritzgießteil ausgebildet, wobei dieses vorteilhaft als einstückiges Kunststoffteil, insbesondere aus thermoplastischem Kunststoff, gestaltet ist. Dies ermöglicht eine einfache und kostengünstige Herstellung und stellt auch sicher, daß keine Einzelteile unbeabsichtigt verlorengehen können. Ferner ist es von Vorteil, wenn das Spritzgießteil aus wenigstens zwei auf die Montage- und Befestigungsverhältnisse angepaßten Werkstoffen besteht. Dadurch kann unter Ausnutzung der jeweils unterschiedlichen Werkstoffeigenschaften eine optimale funktionsgerechte Gestaltung der Anschlußarmatur erzielt werden.

Ein weiterer Vorteil ist es, wenn die Arretierelemente mit etwa in Richtung der Längsachse bzw. Fügeachse verlaufenden Arretierschenkeln gebildet sind, wobei zweckmäßigerweise die Arretierelemente mit sich radial erstreckenden auf die Fügeverhältnisse abgestimmt gestalteten Eingriffselementen ausgebildet sind. Dies erleichtert den Fügevorgang bei der Montage und erlaubt eine sicher Verbindung.

Zur sicheren Aufnahme und Befestigung des Schlauches sind zweckmäßigerweise die Arretierelemente mit sich radial nach innen erstreckenden, auf die Außenrippen des Schlauches abgestimmt gestalteten Eingriffselementen gebildet.

Von besonderem Vorteil ist es, wenn die Arretierelemente sowohl trägerseitige als auch schlauchseitige Eingriffselemente aufweisen. Durch die Integration der Eingriffs-Funktionen wird einerseits eine einfachere und kostengünstige Herstellung ermöglicht und andererseits kann ein vorteilhafter Kombinationseffekt hinsichtlich einer einfachen und leichten Montierbarkeit des Schlauches bei fester und sicherer Befestigung beziehungsweise Verbindung nach dem Füge- bzw. Einrastvorgang erzielt werden.

Zweckmäßigerweise weist der Armaturenkörper anbringungsseitig einen vorzugsweise ringförmigen Stütz- und Anlagekörper mit konzentrisch um die Längsachse bzw. Fügeachse angeordneten Feder- und Fixierelementen auf, die mit einem in die Öffnung des Armaturen-Trägers einbringbaren, vorzugsweise ringförmigen Stützkörper verbunden sind. Diese Maßnahmen ermöglichen eine gute Abstützung in den im wesentlichen kraftbeaufschlagten Bereichen der Anschlußarmatur bei leichter Herstellbarkeit des Armaturenkörpers.

Vor allem bei Kombination einzelner oder mehrerer der vorbeschriebenen Merkmale und Maßnahmen ergibt sich eine Anschlußarmatur, die einfach und schnell hergestellt werden kann und eine sichere Befestigung von Außenrippen aufweisenden Schläuchen, insbesondere Wellschläuchen an einem Armaturen-Träger ermöglicht, wobei die Träger-Befestigungselemente nach dem Einstecken des Armaturen-Körpers in den Armaturen-Träger von der Einsteckseite aus betätigt werden können. Dabei können die Träger-Befestigungselemente mittels Zug- bzw. Druck-Beaufschlagung des Schlauches betätigt werden.

Weitere Einzelheiten, Vorteile, Merkmale und Gesichtspunkte sind auch im nachfolgenden, anhand der Figuren abgehandelten Beschreibungsteil dargestellt.

Ein Ausführungsbeispiel der Erfindung wird nachfolgend anhand der Figuren näher erläutert.

Es zeigen:

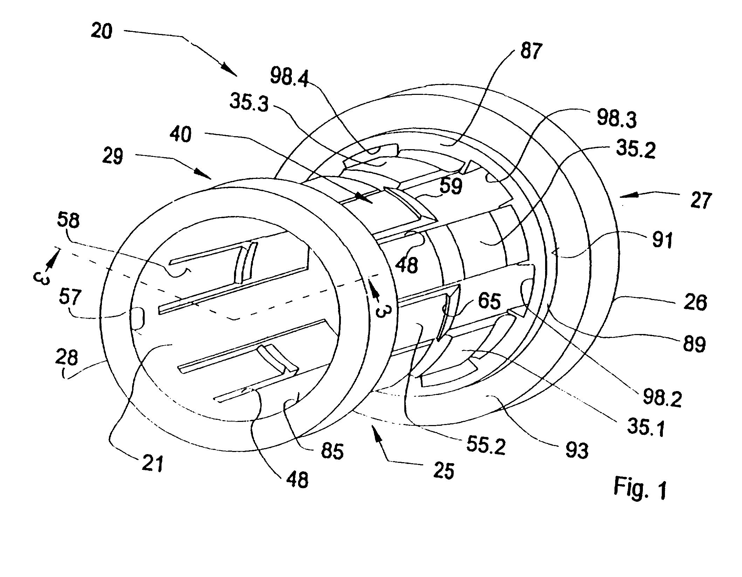

- Fig.1: ein Schrägbild der Anschlußarmatur in einer Rückansicht, das heißt von der dem Armaturen-Träger vor dem Fügevorgang zugewandten Seite,

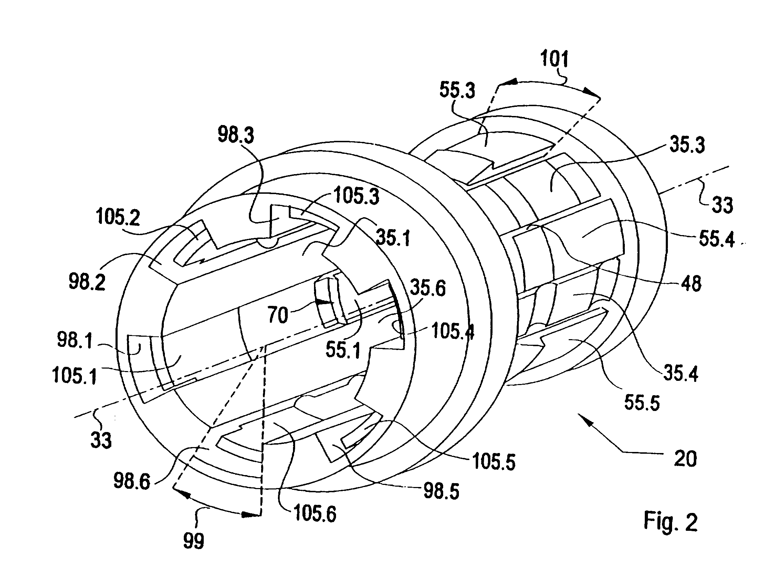

- Fig.2: ein Schrägbildung der Anschlußarmatur in Vorderansicht, das heißt von der dem Armaturen-Träger abgewandten Seite,
- Fig.3: ein Schnittbild der Anschlußarmatur entlang der Schnittlinie 3-3 in Fig.1 in auf den Armaturenträger aufgesteckter Montageposition sowie mit eingestecktem Wellschlauch mit entspanntem Dreifach-Scharnier,
- Fig.4: ein Schnittbild der Anschlußarmatur gemäß Fig.3 in Einbaustellung,
- Fig.5: ein Schrägbild eines weiteren,Ausführungsbeispieles der Anschlußarmatur, wobei sowohl der Wellschlauch als auch die Anschlußarmatur wieder lösbar montiert werden können.

Die als Schlauchbefestigung dienende Anschlußarmatur 20 ist in dem hier beschriebenen Ausführungsbeispiel im wesentlichen von kreiszylinderringförmiger Gestalt. Es versteht sich, daß die Außen- und Innenformgestaltung der Anschlußarmatur 20 auf die jeweils vorliegenden bzw. sinnvollen Gestaltungen der außen gerippten Schläuche bzw. Rohre sowie auf die jeweils vorliegende Lochrandgestaltung des Armaturen-Trägers 45 angepaßt gestaltet ist. Im vorliegenden Fall ist von einer kreisförmigen Lochrandgestaltung bzw. Öffnung 47 des Armaturen-Trägers 45 ausgegangen und es sind im Querschnitt kreisringförmige Wellschläuche 50 vorgesehen.

Die Anschlußarmatur 20 ist mit einem Armaturenkörper 25 gebildet. Dieser weist am anbringungsseitigen Ende 26 den kreisringförmigen Stütz- und Anlagekörper 27 und am gegenüberliegenden Ende 28 den kreisringförmigen Stützkörper 29 auf. Der Stütz- und Anlagekörper 27 ist mit dem Stützkörper 29 einstückig mittels den als Träger-Befestigungselemente dienenden Feder- und Fixierelementen 35 gebildet. Diese sind konzentrisch um die Längs- bzw. Fügeachse 33 in etwa gleichen Winkelabständen angeordnet, wobei im vorliegenden Fall sechs Feder- und Fixierelemente 35.1, 35.2, 35.3, 35.4, 35.5 und 35.6 vorgesehen sind.

Der Stützkörper 29 weist die einerseits als Schlauch-Angriffselemente dienenden sowie andererseits in Verbindung mit den Feder- und Fixierelementen 35.1 bis 35.6 als Träger-Befestigungsmittel dienenden, hier sowohl als schlauchseitige Rast- bzw. Schnappverbindungselemente als auch als trägerseitige Rast- bzw. Schnappverbindungselemente gestalteten federelastischen Arretierelemente 40 auf. Diese sind konzentrisch um die Längs- bzw. Fügeachse 33 angeordnet. Es sind sechs in etwa gleichen Winkelabständen über den Umfang des Armaturenkörpers 25 angeordnete Arretierelemente 40.1, 40.2, 40.3, 40.4, 40.5 und 40.6 vorgesehen. Diese sind identisch gestaltet und sind jeweils zwischen den Feder- und Fixierelementen 35.1 bis 35.6 angeordnet.

Der Stützkörper 29 weist einen Außendurchmesser 51 auf, der geringfügig kleiner ist als der Innendurchmesser 52 der Lochrandgestaltung beziehungsweise Öffnung 47 des Armaturen-Trägers 45. Der Stützkörper 29 weist einen Innendurchmesser 53 auf, der geringfügig größer ist als der Außendurchmesser des Wellschlauches 50. Ferner weist der Stützkörper 29 in einer die Längs- bzw. Fügeachse 33 enthaltenden Schnittebene einen im wesentlichen rechteckigen bzw. quadratischen Querschnitt auf, wobei dieser jeweils auf die vorliegenden Füge- bzw. Kraftverhältnisse abgestimmt gestaltet ist.

Auf der dem Stütz- und Anlagekörper 27 zugewandten Seite des Stützkörpers 29 sind die einstückig mit diesem verbundenen Arretierelemente 40 vorgesehen. Diese sind jeweils mit dem im wesentlichen parallel zur Längs- bzw. Fügeachse 33 verlaufenden und sich in Richtung auf den Stütz- und Anlagekörper 27 erstreckenden Arretierschenkel 55 gebildet. Diese sind hier als Kreishülsen-Segment-Teile ausgebildet, wobei der Innendurchmesser 56 der Arretierschenkel 40 dem Innendurchmesser 53 des Stützkörpers 29 entspricht, so daß die jeweilige Innenmantelfläche 57 des Stützkörpers 29 sowie die Innenmantelfläche 58 der Arretierschenkel 55 fluchtend ineinander übergehen.

An dem dem Stütz- und Anlagekörper 27 gegenüberliegenden freien Ende 59 des Arretierschenkels 55 ist jeweils das hakenförmige, sich radial nach außen erstreckende Eingriffselement 60 vorgesehen. Dieses ist mit dem vorderen, normal zur Längs- bzw. Fügeachse 33 verlaufenden Wandteil 61 gebildet. An dieses schließt sich das in dem Winkel 62 schräg nach innen außen verlaufende Gleitflächen-Wandteil 63 an. Daran anschließend verläuft das den Arretierhaken 65 bildende, normal zur Längsachse 33 nach innen verlaufende Arretierhaken-Wandteil 66. An dieses schließt sich das parallel zur Längsachse 33 und parallel zur Innenmantelfläche 58 verlaufende Außenwand-Teil 67 des Arretierschenkels 55 an.

Im Bereich des freien Endes 59 des Arretierschenkels 55 ist schlauchseitig das hakenförmig gestaltete Eingriffselement 70 vorgesehen. Dieses bildet mit dem Arretierschenkel 55 des Arretierelementes 40 das Schlauch-Rast- bzw. Schnappverbindungselement. Das hakenförmige Eingriffselement 70 ist hier mit dem sich schräg nach innen und in Richtung auf das Ende 28 des Stützkörpers 29 erstreckenden Eingriffshaken 75 gebildet. Das Eingriffselement 70 ist dabei sowohl auf die jeweiligen Fügeverhältnisse als auch auf die Wand- bzw. Rippengestaltung des Wellschlauches 50 abgestimmt gestaltet, so daß sich einerseits der Wellschlauch 50 problemlos von Hand in die zentrale Öffnung 21 der Anschlußarmatur 20 einstecken läßt und andererseits in Verbindung mit der Gestaltung des Arretierelementes 40 das Angriffselement 70 leicht und sicher in der der gewünschten Schlauchposition entsprechenden Querrippennut 71 einrastet. Dadurch verbleibt auch bei Anwendung der für die sichere und feste Montage der Anschlußarmatur 20 an dem Armaturen-Träger 45 vorgesehenen beziehungsweise notwendigen Kraft der Wellschlauch 50 sicher in der gewünschten Einrastposition.

Die Feder- und Fixierelemente 35.1 bis 35.6 schließen sich innen fluchtend an den Stützkörper 29 an und sind im wesentlichen parallel zur Längs- bzw. Fügeachse 33 ausgebildet. Die Feder- und Fixierelemente 35.1 bis 35.6 sind dabei so über den Umfang des Armaturen-körpers 25 angeordnet, daß jeweils zwischen zwei benachbarten Feder- und Fixierelementen 35 ein Arretierschenkel 55 des Arretierelementes 40 liegt, wobei jeweils zwischen einem Feder- und Fixierelement und einem Arretierschenkel 55 ein sich in Richtung der Längs- bzw. Fügeachse 33 erstreckender Längsspalt 48 ausgebildet ist.

Die Feder- und Fixierelemente 35.1 bis 35.6 sind identisch gestaltet, so daß nachfolgend ein Feder- und Fixierelement 35 näher beschrieben werden kann. Das Feder- und Fixierelement 35 ist mit einem Dreigelenk-Scharnier gebildet, das die Filmscharniere 72, 73 und 74 aufweist. Zwischen den Filmscharnieren 72 und 73 ist das Feder- und Fixierelement-Teil 77 und zwischen den Filmscharnieren 73 und 74 ist das Feder- und Fixierelement-Teil 78 vorgesehen, wobei sowohl die Filmscharniere 72, 73, 74 als auch die Feder- und Fixierelement-Teile 77, 78 einstückig mit dem Stützkörper 29 sowie mit dem Stütz- und Anlagekörper 27 verbunden sind. Dabei schließt sich das Filmscharnier 72 unmittelbar an den Stützkörper 29 an und geht in den Feder- und Fixierelement-Teil 77 über. Dieser weist eine im Querschnitt etwa rechteckförmige Gestalt und eine Dicke 79 auf, die auf die vorliegende Füge- und Andruckverhältnisse in Verbindung mit der Lochrandgestaltung des Armaturen-Körpers 45 angepaßt gestaltet ist. An den Feder- und Fixierelement-Teil 77 schließt sich das Filmscharnier 73 an, das im wesentlichen gleich wie die anderen Filmscharniere 72 und 74 gestaltet ist. An das Filmscharnier 73 schließt sich der stütz- und anlagekörperseitige Feder- und Fixierelement-Teil 78 an. Dieser ist mit dem auf die Lochungsgestaltung des Armaturen-Trägers 45 abgestimmt gestalteten Fixierelement 81 ausgebildet. Dieses ist im vorliegenden Fall mit einer höcker- bzw. wulstförmigen, sich nach außen erstreckenden Materialansammlung gebildet, wobei der Scheitelpunkt bzw. die Scheitellinie 82 den Abstand 83 von der inneren Mantelfläche 85 des Feder- und Fixierelementes 35 aufweist. Ausgehend vom Scheitelpunkt bzw. der Scheitellinie 82 fällt die Dicke des Feder- und Fixierelement-Teiles 78 auf eine Dicke 86 ab, die in etwa der Dicke 79 des Feder- und Fixierelement-Teiles 77 entspricht. Anschließend an das Feder- und Fixierelement-Teil 78 ist das Filmscharnier 74 vorgesehen, das unmittelbar in den normal zur Längs- bzw. Fügeachse 33 verlaufenden Wandteil 87 des ringförmigen Stütz- und Anlagekörpers 27 übergeht. Daran schließt sich der parallel zur Längsachse 33 verlaufende Wandteil 89 an, dessen kreisringförmige Mantelfläche 91 einen Außendurchmesser 92 aufweist, der geringfügig kleiner ist als der Innendurchmesser 52 der Lochrandgestaltung beziehungsweise Öffnung 47 im Armaturen-Träger 45. An den Wandteil 89 schließt sich der normal zur Längsachse 33 ausgebildete Anlage-Wandteil 93 an. An den Anlage-Wandteil 93 schließt sich der parallel zur Längsachse 33 verlaufende Wandteil 94 der hier flanschförmig ausgebildeten Stützschulter 95 an. Diese weist eine kreiszylindrische äußere Gestalt mit einem Außendurchmesser 96 auf, der auf die jeweiligen Montage- und Einbauverhältnisse abgestimmt gestaltet ist. An die Stützschulter 95 schließt sich in Richtung auf das Ende 26 des Armaturenkörpers 25 der zum Ende 26 leicht konisch verlaufende Stütz- und Schutzteil 97 an.

Der Stütz- und Anlagekörper 27 weist die sich in Richtung der Längs- bzw. Fügeachse 33 erstreckenden Nuten 98 auf. Diese sind konzentrisch um die Längs- bzw. Fügeachse 33 bzw. um den Innenumfang des Stütz- und Anlagekörpers 27 herum in einem der Anzahl der Arretierelemente 40 entsprechenden Abstand beziehungsweise Winkel angeordnet.

Entsprechend den hier vorgesehenen sechs, auf einem Kreis konzentrisch angeordneten Arretierelementen 40.1 bis 40.6 sind die dazu passend gestalteten Nuten 98.1 bis 98.6 jeweils um einen Zentriwinkel 99 zueinander versetzt angeordnet, der etwa 60° beträgt.

Die Nuten 98.1 bis 98.6 weisen eine dem Zentriwinkel 99 entsprechende Breite auf, die geringfügig größer ist als die dem Zentriwinkel 101 der Arretierschenkel 55 entsprechenden Breite, so daß die Arretierschenkel 55 problemlos und geführt in die Nuten 98.1 bis 98.6 eintreten können.

Zur Arretierung der Arretierschenkel 55.1, 55.2, 55.3, 55.4, 55.5 und 55.6 sind auf die Fügeverhältnisse passend gestaltete, federnde Arretierlappen 105.1, 105.2, 105.3, 105.4, 105.5 und 105.6 vorgesehen, wobei hier jedem Arretierschenkel 55.1 bis 55.6 jeweils ein Arretierlappen 105.1 bis 105.6 zugeordnet ist, so daß die Anzahl der Arretierlappen 105 der Anzahl der Arretierschenkel 55 entspricht. Anstelle der bei diesem Ausführungsbeispiel vorgesehenen sechs Arretierlappen 105.1 bis 105.6 kann jedoch auch die Anzahl der Arretierlappen 105 größer oder kleiner als die Anzahl der Arretierschenkel 55 sein. Beispielsweise können die Arretierlappen 105 zu Gruppen zusammengefaßt werden, bis hin zu einem einzigen, konzentrisch um die Längs- bzw. Fügeachse 33 angeordneten, federelastischen Ringwulst.

Im vorliegenden Ausführungsbeispiel sind die Arretierlappen 105.1 bis 105.6 den Nuten 98.1 bis 98.6 zugeordnet, wobei sie in den Nuten 98.1 bis 98.6 angeordnet sind, so daß für jeden Arretierschenkel 55.1 bis 55.6 definierte Füge- und Führungsverhältnisse gegeben sind. Die Arretierlappen 105 weisen eine Breite auf, die etwa der Breite der Arretierschenkel 55 entspricht.

Die Arretierlappen 105 sind im Bereich des dem Stützkörper 29 zugewandten Endes 106 des Stütz- und Anlagekörpers 27 mit diesem einstückig verbunden und weisen die Haken-Eintritts- und Führungsfläche 107 auf. Diese weist einen Abstand 108 von der Längsachse 33 auf, der so bemessen ist, daß die Arretierhaken 65 der Arretierschenkel 55 problemlos durch transversale Axialverschiebung entlang der Längs- bzw. Fügeachse 33 entlanggleiten können. Der Abstand 108 ist dabei so bemessen, daß er mindestens dem Abstand 68 zwischen der den Gleitflächen-Wandteil 63 des Arretierhakens 65 nach innen begrenzenden Kante 69 und der Füge- bzw. Längsachse 33 entspricht. Im vorliegenden Fall ist der Abstand 108 geringfügig größer als der Abstand 64 zwischen der Hakenspitze 76 und der Längs- bzw. Fügeachse 33. Die Arretierlappen 105 sind mit dem die etwa parallel zur Längs- bzw. Fügeachse 33 verlaufenden Haken-Eintritts- und -Führungsflächen 107 aufweisenden Wandteil 109 sowie dem in einem auf die Fügeverhältnisse und die Werkstoffverhältnisse abgestimmt gestalteten Winkel 111 schräg nach innen verlaufenden federelastischen Wandteil 112 gebildet.

Das Wandteil 112 weist die normal zur Füge- bzw. Längsachse 33 verlaufende, vordere Ring-Stirnfläche 113 auf, an der der Arretierhaken 65 mit seinem Arretierhaken-Wandteil 66 nach der Komplettmontage der Anschlußarmatur 20 einrastend anliegt. Hierzu weist die Ring-Stirnfläche 113 von der Längs- bzw. Fügeachse 33 einen Abstand 114 auf, der etwa dem Abstand 117 zwischen dem Außenwand-Teil 67 des Arretierhakens 65 und der Längsachse 33 entspricht, so daß der Arretierhaken 65 sicher einrasten kann. Die Länge des Arretierschenkels bzw. der Abstand 119 zwischen der dem Stütz- und Anlagekörper 27 gegenüberliegenden, normal zur Längsachse 33 verlaufenden Ringfläche 120 des Stützkörpers 29 und dem Arretierhaken-Wandteil 66 ist dabei so auf den Abstand 121 zwischen der Ring-Stirnfläche 113 des schrägen Wandteils 112 der Arretierlappen 105 und dem Anlage-Wandteil 93 des Stütz- und Anlagekörpers 27 abgestimmt gestaltet, daß unter Berücksichtigung der federelastischen Deformierbarkeit des Feder- und Fixierelementes 35 sowie des Feder- und Fixierelement-Teils 78 mit dem Fixierelement 81 eine hinreichend gute Klemm-Befestigung der Anschlußarmatur 20 und des Wellschlauches 50 im Bereich der Lochrandgestaltung des Armaturen-Trägers 45 erzielt wird. Dies bedeutet, daß infolge der gewählten Elastizitäts- und Deformationsverhältnisse eine sichere Befestigung der Anschlußarmatur 20 und des Wellschlauches 50 für einen bestimmten Dickenbereich der Lochrandgestaltung bzw. Dicke 46 des Armaturen-Trägers 45 möglich ist.

Im nachfolgenden Beschreibungsteil wird die Montage des Wellschlauches 50 mittels der Anschlußarmatur 20 an dem Armaturen-Träger 45 genauer beschrieben.

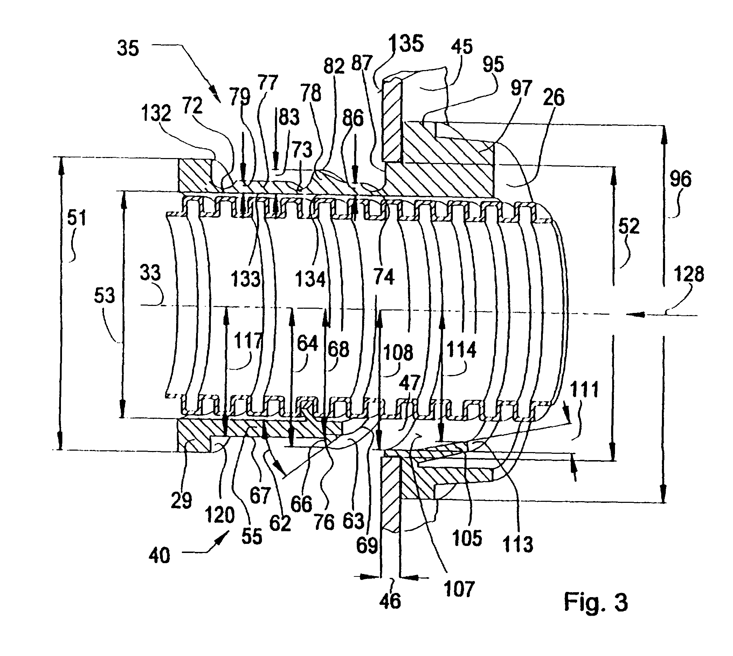

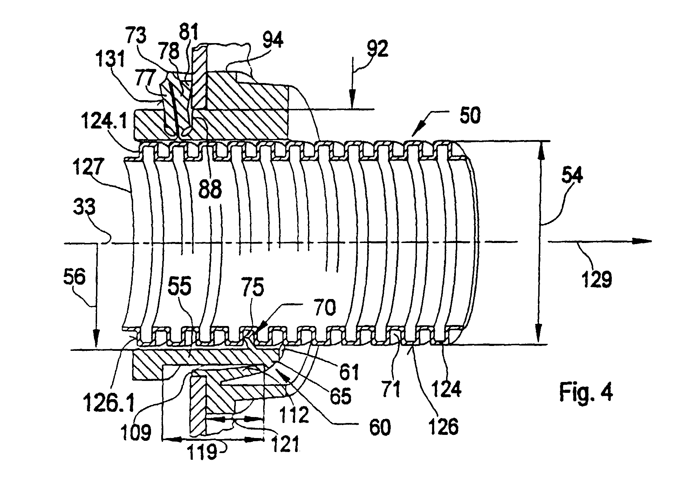

Zur Montage des Wellschlauches kann entweder zunächst die Anschlußarmatur 20 in die hierfür vorgesehene Öffnung 47 des Armaturen-Trägers 45 mit dem Stützkörper 29 voran eingesteckt und nachfolgend der Wellschlauch 50 eingebracht werden, oder es kann zunächst der Wellschlauch 50 in die Anschlußarmatur 20 eingesteckt und nachfolgend die Anschlußarmatur 20 zusammen mit dem Wellschlauch 50 in die entsprechende Öffnung 47 des Armaturen-Trägers 50 eingebracht werden. Hierfür wird in beiden Fällen der Wellschlauch 50 ausgehend vom Ende 26 des Stütz- und Anlagekörpers 27 in die Öffnung 21 der Anschlußarmatur 20 auf die gewünschte Länge eingesteckt. Dabei gleiten die im Ausführungsbeispiel kreisringförmig ausgebildeten Querrippen 124 des Wellschlauches 50 mit ihren äußeren Anlageflächen 126 frei geführt in der bohrungsförmigen Öffnung 21 der Anschlußarmatur 20 bis die am vorderen Ende 125 des Wellschlauches 50 vorhandene erste Rippe 124.1 mit ihrer äußeren Anlagefläche 126.1 das jeweils auf der Innenseite der Arretierschenkel 55.1 bis 55.6 vorgesehene hakenförmige Eingriffselement 70 berührt. Nachfolgend wird der Wellschlauch in Richtung des Pfeils 128, also parallel zur Fügeachse 33, gegen den geringen Widerstand der elastisch nach außen federnden Arretierschenkel 55.1 bis 55.6 in die Anschlußarmatur 20 eingeschoben. Für den Fall, daß die Anschlußarmatur 20 und der Wellschlauch 50 noch nicht in die Öffnung des Armaturen-Trägers 45 eingebracht, worden sind, wird die Anschlußarmatur 20 in Richtung des Pfeils 128 in die Öffnung 47 des Armaturen-Trägers 45 eingesteckt, bis die Anschlußarmatur 20 mit dem ringförmigen Anlage-Wandteil 93 im Lochrandbereich des Armaturen-Trägers 45 anliegt. Im vorliegenden, in den Fig.3 und 4 gezeigten Ausführungsbeispiel ist von einer kreiszylindrischen Öffnung des Armaturen-Trägers 45 ausgegangen, so daß die hierfür passend gestaltete kreiszylindrische Zentrier- und Fixierschulter 88 am Rand 49 der Öffnung 47 des Armaturen-Trägers 45 anliegt und folglich die gesamte Anschlußarmatur 20 zusammen mit dem Wellschlauch 50 in ihrer Position zentriert und fixiert ist.

Die Befestigung bzw. Fixierung der Anschlußarmatur 20 sowie des Wellschlauches 50 am Armaturen-Träger 45 erfolgt anschließend in der Weise, daß der Stütz- und Anlagekörper 27 in Richtung des Pfeils 128 auf den Armaturen-Träger 45 gedrückt wird, während gleichzeitig der Wellschlauch 50 in Richtung des Pfeils 129 gezogen wird. Dabei zieht der mit der Quer-Rippennut 71 in die hakenförmigen Eingriffselemente 70.1, 70.2, 70.3, 70.4, 70.5 und 70.6 der Arretierschenkel 55.1 bis 55.6 eingerastete bzw. einrastende Wellschlauch 50 den Stützkörper 29 sowie das Feder- und Fixierelement 35 in Richtung des Pfeils 129. Infolge dessen schwenken die Feder- und Fixierelement-Teile 77 sowie 78 in entgegengesetzter Richtung um das gemeinsame, sich radial nach außen bewegende Filmscharnier 73 und in entgegengesetzter Richtung um die jeweiligen Filmscharniere 72 bzw. 74. Dabei tritt eine Vergrößerung des Außenumfanges bzw. des Außendurchmessers des Feder- und Fixierelementes 35 auf, wodurch eine entsprechende Klemm- bzw. Fixierwirkung erzielt wird. Der Wellschlauch 50 wird so lange bzw. so weit in Richtung des Pfeils 129 herausgezogen, bis die Arretierhaken 65.1 bis 65.6 an den zugeordneten Arretierlappen 105.1 bis 105.6 einrasten. In dieser, in Fig.4 dargestellten Position, sind die beiden Feder- und Fixierelement-Teile 77 und 78 um etwa 180° um das gemeinsame Filmscharnier 73 geschwenkt, wobei der Feder- und Fixierelement-Teil 77 mit seiner Außenfläche 131 an der zu dem Stützkörper 29 hinweisenden Kante 132 und/oder der Ringfläche 120 des Stützkörpers 29 federelastisch anliegt, und wobei der Scheitelpunkt bzw. die Scheitellinie 82 des Fixierelementes 81 des Feder- und Fexierelement-Teils 78 federelastisch an der dem Stützkörper 29 gegenüberliegenden Anlagefläche 135 des Armaturen-Trägers 45 anliegt. Dabei stützen sich die beiden Feder- und Fixierelement-Teile 77 und 78 jeweils mit ihren Innenflächen 133 bzw. 134 aufeinander ab.

Es ist ersichtlich, daß zum Zwecke der Herstellung der vorstehend beschriebenen Befestigung bzw. Verbindung des Armaturenkörpers 25 der Anschlußarmatur 20 mit dem Armaturen-Träger 45 der Wellschlauch 50 eine hinreichend große Eigensteifigkeit aufweisen muß, damit dieser nicht in unerwünschter Weise deformiert wird. Es hat sich allerdings gezeigt, daß die üblicherweise verwendeten Kunststoff-Wellschläuche, wie sie für die Ein- oder Durchführung, Abdichtung, Zugentlastung oder Schutz-Verlegung von Leitungen, Kabeln oder Schläuchen eingesetzt werden, eine aufgrund dieses Anwendungszweckes hinreichende Eigensteifigkeit aufweisen, so daß insbesondere bei Verwendung von Kunststoffen, wie Polyäthylen, Polypropylen oder Polyamid, als Konstruktionswerkstoff, insbesondere im Bereich der Filmscharniere 72, 73 und 74 eine problemlose und leichte Montage, auch von Hand, möglich ist, ohne daß es zu einer Deformation der Wellschläuche kommt. Die Eigensteifigkeit von Wellschläuchen aus Metall ist naturgemäß größer als die Steifigkeit der für dieses Anwendungsgebiet üblicherweise eingesetzten Massenkunststoffe bzw. technischen Kunststoffe, so daß es deshalb auch in diesem Fall zu keiner zugbeanspruchungsbedingten Deformation der Metallschläuche kommt.

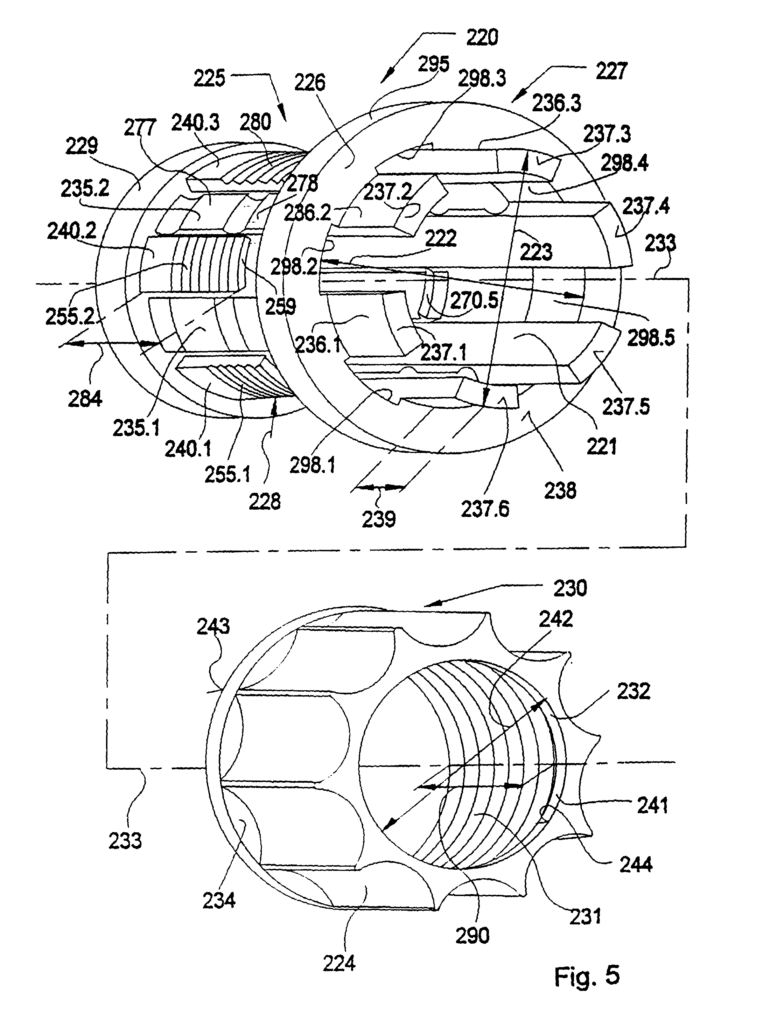

Für bestimmte Anwendungsfälle kann es gewünscht oder notwendig sein, nach einer normal erfolgten Montage der Anschlußarmatur 20 und des Wellschlauches 50 die Anschlußarmatur 20 und/oder den Wellschlauch 50 wieder zu demontieren oder seine Einstecklänge zu verändern. Ein Ausführungsbeispiel der Anschlußarmatur mit wieder lösbar gestalteten Schlauch-Angriffselementen und wieder lösbar gestalteten Träger-Befestigungselementen zeigt Fig.5. Durch diese Maßnahmen können sowohl der Wellschlauch als auch die Anschlußarmatur wieder lösbar montiert werden. Die Anschlußarmatur 220 ist in diesem Fall mit einem Armaturenkörper 225 und einer Mutter 230 gebildet. Im Unterschied zum ersten Ausführungsbeispiel sind die Arretierschenkel 255.1 bis 255.6 des Armaturenkörpers 225 jeweils mit dem auch mit trägerseitigem Eingriffselement 260 bezeichneten Außengewinde 280 gestaltet, das ausgehend vom freien Ende 259 der Arretierschenkel 255 eine auf die Befestigungsverhältnisse abgestimmte Gewindetiefe 284 aufweist. Die Arretierschenkel 255.1 bis 255.6 greifen im montierten Zustand jeweils durch die im Stütz- und Anlagekörper 227 vorgesehenen Nuten 298.1 bis 298.6. Diese weisen einen Teil-Innendurchmesser 222 auf, der geringfügig größer ist als der Teil-Außendurchmesser 228 des Außengewindes 280 der Arretierschenkel 255. An die Feder- und Fixierelemente 235.1 bis 235.6 schließen sich fluchtend mit gleicher Breite die über die Stützschulter 295 des Stütz- und Anlagekörpers 227 hinausragenden, sich axial erstreckenden Führungslappen 236.1 bis 236.6 an. Ihr Teil-Außendurchmesser 223 ist kleiner als der Gewindekerndurchmesser der Außengewinde 280 und auch kleiner als der Innengewindedurchmesser des Innengewindes 231 der Mutter 230. Die Führungslappen 236.1 bis 236.6 weisen jeweils die normal zur Längs- bzw. Fügeachse 233 in einer gemeinsamen Ebene liegenden Stirnflächen 237.1 bis 237.6 auf. Die Länge 239 der Führungslappen 236.1 bis 236.6 entspricht dem Abstand zwischen der bedienerseitigen ringförmigen Anlagefläche 238 der Stützschulter 295 und den Stirnflächen 237.1 bis 237.6.

Die Mutter 230 ist hohlzylindrisch gestaltet und weist bedienerseitig die Schulter 232 auf. Diese ist mit der kreiszylindrischen Öffnung 241 gebildet, deren Innendurchmesser 242 kleiner ist als der Teil-Außendurchmesser 223 der Führungslappen 236.1 bis 236.6 und der größer ist als der Außendurchmesser 54 des Wellschlauches 50. Die Mutter 230 ist ferner mit dem dem Armaturenkörper 225 zugeordneten Analgeflansch 234 gebildet und weist im übrigen das auf die Montageverhältnisse angepaßt gestaltete Oberflächenprofil 224 auf. Das Innengewinde 231 der Mutter 230 erstreckt sich über eine Gewindetiefe, die hier dem Abstand 290 zwischen der normal zur Längs- bzw. Fügeachse 233 ausgebildeten stütz- und anlagekörperseitigen Ring-Stirnfläche 243 des Anlageflansches 234 und der normal zur Längs- bzw. Fügeachse 233 ausgebildeten inneren Ring-Stirnfläche 244 der Schulter entspricht. Der Abstand 242 ist dabei größer als die Länge 239 der Führungslappen 236. Gegebenenfalls kann die Anlageschulter 234 im Bereich der Ring-Stirnfläche 243 mit einer konzentrisch um die Längsachse 233 angeordneten Ringnut zur Aufnahme eines O-Ringes gestaltet sein. Dadurch ist der Wellschlauch 50 spritzwassergeschützt montierbar.

Zur Montage der Anschlußarmatur 220 und des Wellschlauches 50 wird dieser zunächst durch die Öffnung 241 der Mutter 230 geführt und anschließend in die Öffnung 221 des Armaturenkörpers 225 eingesteckt, bis er an den hakenförmigen Eingriffselementen 270.1 bis 270.6 einrastet. Anschließend wird die Anschlußarmatur 220 zusammen mit dem Wellschlauch 50 in die Öffnung 47 des Armaturen-Trägers 45 eingesteckt, wie oben bereits im Zusammenhang mit der Abhandlung des ersten Ausführungsbeispieles beschrieben. Danach wird die Mutter 230 auf die Führungslappen 236 aufgesteckt und dort zentriert gehalten. Anschließend wird der Stütz- und Anlagekörper 227 über die Mutter 230 in Richtung auf den Armaturen-Träger 45 gedrückt, während gleichzeitig der Wellschlauch 50 in der entsprechenden, mit dem Pfeil 129 in Fig.4 angedeuteten Richtung gezogen wird. Dabei wird der Stützkörper 229 zusammen mit den Arretierschenkeln 255 der Arretierelemente 240 in Richtung auf den Stütz- und Anlagekörper 227 bewegt, wobei bei der weiteren Ausziehbewegung die Arretierschenkel 255 durch die Nuten 298 hindurchtreten, bis das Außengewinde 280 der Arretierschenkel 255 an dem Innegewinde 231 der Mutter 230 anliegt. Durch Drehen der Mutter 230 werden anschließend die Gewindegänge der Mutter 230 und die Gewindegänge der Arretierschenkel 255 in Eingriff gebracht, so daß die Feder- und Fixierelemente 235.1 bis 235.6 nicht mehr elastisch zurückfedern können. Anschließend wird die Mutter 230 so lange in gleicher Drehrichtung weitergedreht, bis die Feder- und Fixierelemente 235.1 bis 235.6 an der inneren Anlagefläche 135 des Armaturen-Trägers 45 unter Ausbildung einer sicheren Befestigung des Armaturenkörpers 225 am Armaturen-Träger 45 anliegen.

Zum Wiederlösen der Anschlußarmatur 220 wird die Mutter 230 entgegen der zuvor beschriebenen Drehrichtung so lange gedreht, bis sich das Innengewinde 231 der Mutter 230 nicht mehr in Eingriff mit dem jeweiligen Außengewinde 280 der Arretierschenkel 255 befindet, so daß die Feder- und Fixierelemente 235 elastisch zurückfedern können. Anschließend kann der Armaturenkörper 225 aus der Öffnung 47 des Armaturen-Trägers 45 zur Einsteckseite hin entfernt werden. Schließlich kann die Anschlußarmatur 220 durch axiales Verschieben relativ zum Wellschlauch 50 einfach von diesem gelöst bzw. entfernt werden.

Ein wesentlicher Aspekt der Erfindung kann vorteilhafterweise auch wie folgt dargestellt werden: Anschlußarmatur 20, 220 zur Befestigung von Außenrippen aufweisenden Schläuchen, insbesondere Wellschläuchen 50, an einem Armaturen-Träger 45, mit einem in eine Öffnung 47 des Armaturen-Trägers 45 einbringbaren Armaturen-Körper 25, 225, mit Träger-Befestigungselementen zur Befestigung der Anschlußarmatur 20, 220 an dem Armaturen-Träger 45, mit wenigstens einer Öffnung 21, 221 zur Ein- bzw. Durchführung des Schlauches, mit Schlauch-Angriffselementen zur Festlegung des Schlauches in der Anschlußarmatur 20, 220, dadurch gekennzeichnet, daß die Träger-Befestigungselemente nach dem Einstecken des Armaturen-Körpers 25, 225 in den Armaturen-Träger 45 von der Einsteckseite aus betätigbar gestaltet sind.

Nachfolgend wird ein wichtiger Teil der Beschreibung wiedergegeben: Die Anschlußarmatur dient zur Befestigung von Außenrippen aufweisenden Schläuchen an einem Armaturen-Träger. Sie weist einen Armaturenkörper auf, der in eine Öffnung des Armaturen-Trägers eingesetzt werden kann. Zur Befestigung der Anschlußarmatur an dem Armaturen-Träger sind Träger-Befestigungselemente vorgesehen. Die Anschlußarmatur hat eine Öffnung bzw. Bohrung zur Ein- bzw. Durchführung des Schlauches und weist Schlauch-Angriffselemente auf, die zur Festlegung des Schlauches dienen. Die Anschlußarmatur ist dabei so gestaltet, daß sie unter Ausbildung einer sicheren Verbindung zum Armaturen-Träger einerseits und zum Schlauch andererseits von nur einer Seite des Armaturen-Trägers leicht und schnell anbringbar ist.

## Patentansprüche

1. Anschlußarmatur (20,220) zur Befestigung von Außenrippen aufweisenden Schläuchen, insbesondere Wellschläuchen (50), an einem Armaturen-Träger (45), mit einem in eine Öffnung (47) des Armaturen-Trägers (45) einbringbaren Armaturen-Körper (25,225), mit Träger-Befestigungselementen zur Befestigung der Anschlußarmatur (20,220) an dem Armaturen-Träger (45), mit wenigstens einer Öffnung (21,221) zur Ein- bzw. Durchführung des Schlauches, mit Schlauch-Angriffselementen zur Festlegung des Schlauches in der Anschlußarmatur (20,220), wobei die Träger-Befestigungselemente als außenumfangs- bzw. außendurchmesservergrößerbare, konzentrisch um die Längs- bzw. Fügeachse (33,233) angeordnete federelastische Feder- und Fixierelemente (35,235) für eine trägerseitige Rast- bzw. Schnappverbindung und die Schlauch-Angriffselemente als schlauchseitige Rast-bzw.Schnappverbindungselementegestaltet sind und die Schlauch-Angriffselemente und/oder die Träger-Befestigungselemente konzentrisch um die Längs- bzw. Fügeachse (33,233) angeordnete federelastische Arretierelemente (40,240) sind, die mit etwa in Richtung der Längs- bzw. Fügeachse (33,233) verlaufenden Arretierschenkeln (55,255) und mit sich radial erstreckenden, auf die Fügeverhältnisse abgestimmt gestalteten Eingriffselementen (60,260; 70,270) versehen sind und wobei der Armaturenkörper (25,225) anbringungsseitig mit einem vorzugsweise ringförmigen Stütz- und Anlagekörper (27,227) versehen ist, **dadurch gekennzeichnet,** daß die Feder- und Fixierelemente (35,235) jeweils mit einem Dreifach-Scharnier mit zwischenliegenden Feder-und Fixierelement-Teilen (77,277,78,278) gebildet sind, die bei der Befestigung bzw. Fixierung der Anschlußarmatur um die Scharniere unter Vergrößerung des Außenumfanges bzw. des Außendurchmessers der Feder- und Fixierelemente (35,235) verschwenkbar sind.

2. Anschlußarmatur nach Anspruch 1, dadurch gekennzeichnet, daß das Dreigelenk-Scharnier Filmscharniere (72,73,74) aufweist und sowohl die Filmscharniere (72,73,74) als auch die Feder- und Fixierelement-Teile (77,277,78,278) einstückig mit einem Stützkörper (29) und dem Stütz- und Anlagekörper (27,227) verbunden sind.

3. Anschlußarmatur nach Anspruch 1 oder 2, dadurch gekennzeichnet, daß zumindest ein Feder- und Fixierelement-Teil (77,277,78,278) mit einem auf die Lochrandgestaltung bzw. Dicke (46) des Armaturen-Trägers (45) angepaßten federelastischen Fixierelement gebildet ist.

4. Anschlußarmatur nach einem der Ansprüche 1 bis 3, dadurch gekennzeichnet, daß im Bereich des Stütz- und Anlagekörpers (27) ein oder mehrere konzentrisch um die Längs- bzw. Fügeachse (33) angeordnete, sich etwa in Richtung der Längs- bzw. Fügeachse (33) erstreckende federelastische Stützelemente vorgesehen sind, an denen die trägerseitigen Eingriffselemente (60) einrasten können.

5. Anschlußarmatur nach einem der Ansprüche 1 bis 4, dadurch gekennzeichnet, daß die Arretierelemente (40,240) mit sich radial nach innen erstreckenden, auf die Außenrippen des Schlauches abgestimmt gestalteten Eingriffselementen (70,270) gebildet sind.

6. Anschlußarmatur nach einem der Ansprüche 1 bis 5, dadurch gekennzeichnet, daß die Arretierelemente (40,240) mit trägerseitigen Eingriffselementen (60,260) und mit schlauchseitigen Eingriffselementen (70,270) ausgebildet sind.

7. Anschlußarmatur nach einem der Ansprüche 1 bis 6, dadurch gekennzeichnet, daß die Schlauch-Angriffselemente wieder lösbar gestaltet sind.

8. Anschlußarmatur nach einem der Ansprüche 1 bis 7, dadurch gekennzeichnet, daß die Träger-Befestigungselemente wieder lösbar gestaltet sind.

9. Anschlußarmatur nach einem der Ansprüche 1 bis 8, dadurch gekennzeichnet, daß die Träger-Befestigungselemente mit konzentrisch um die Längs- bzw. Fügeachse (233) angeordneten Arretierelementen (240) mit Außengewinde (280) und einer aufschraubbaren Mutter (230) gebildet sind.

10. Anschlußarmatur nach einem der Ansprüche 1 bis 9, dadurch gekennzeichnet, daß die Anschlußarmatur (20,220) als einziges Spritzgießteil, insbesondere als einstückiges Kunststoffteil, vorzugsweise aus thermoplastischem Kunststoff, ausgebildet ist.

11. Anschlußarmatur nach Anspruch 10, dadurch gekennzeichnet, daß das Spritzgießteil aus wenigstens zwei auf die Montage- und Befestigungsverhältnisse angepaßten Werkstoffen besteht.

## Claims

1. Connecting fitting (20, 220) for securing tubes or hoses having external ribs, particularly corrugated hoses (50), to a fitting carrier (45), having a fitting member (25, 225) adapted to be inserted in an opening (47) in the fitting carrier (45), having carrier fixing elements for securing the connecting fitting (20, 220) to the fitting carrier (45), with at least one opening (21, 221) for the introduction and passage of the hose, with hose gripping elements for fixing the hose in the connecting fitting (20, 220), the carrier fixing elements being constructed as springily elastic spring and fixing elements (35, 235) for a latching or snap-fit connection on the carrier side, which are expandable in their outer circumference or outer diameter and arranged concentrically about the longitudinal or seam axis (33, 233), the hose gripping elements being constructed as latching or snap-fit connecting elements on the hose side, and the hose gripping elements and/or the carrier fixing elements being springily elastic locking members (40, 240) arranged concentrically about the longitudinal or seam axis (33, 233), which are provided with locking arms (55,255) extending substantially in the direction of the longitudinal or seam axis (33, 233) and with radially extending engaging elements (60, 260; 70,270) constructed to suit the nature of the seam, and wherein the fitting body (25, 225) is provided on its mounting side with a preferably annular support and abutment member (27, 227), **characterised in that** the spring and fixing elements (35, 235) are each formed with a triple hinge with interposed spring and fixing element parts (77,277,78,278) which are pivotable about the hinges during attachment or fixing of the connecting fitting, thereby increasing the outer circumference or outer diameter of the spring and fixing elements (35, 235).

2. Connecting fitting according to claim 1, characterised in that the three-way joint has film hinges (72, 73, 74) and both the film hinges (72, 73, 74) and the spring and fixing element parts (77,277,78,278) are integrally connected to a support member (29) and the support and abutment member (27, 227) .

3. Connecting fitting according to claim 1 or 2, characterised in that at least one spring and fixing element part (77,277,78,278) is formed with a springily elastic fixing element adapted to the perforated edge configuration or thickness (46) of the fitting carrier (45) .

4. Connecting fitting according to one of claims 1 to 3, characterised in that, in the region of the support and abutment member (27), there are one or more springily elastic support elements arranged concentrically about the longitudinal or seam axis (33) and extending substantially in the direction of the longitudinal or seam axis (33), on which the engaging elements (60) on the carrier side can engage.

5. Connecting fitting according to one of claims 1 to 4, characterised in that the locking elements (40, 240) are formed with radially inwardly extending engaging elements (70, 270) shaped to fit the outer ribs of the hose.

6. Connecting fitting according to one of claims 1 to 5, characterised in that the locking elements (40, 240) are formed with engaging elements (60, 260) on the carrier side and engaging elements (70, 270) on the hose side.

7. Connecting fitting according to one of claims 1 to 6, characterised in that the hose gripping elements are constructed to be releasable.

8. Connecting fitting according to one of claims 1 to 7, characterised in that the carrier fixing elements are constructed to be releasable.

9. Connecting fitting according to one of claims 1 to 8, characterised in that the carrier fixing elements are formed with locking elements (240) arranged concentrically about the longitudinal or seam axis (233), having an external thread (280) and a nut (230) which can be tightened.

10. Connecting fitting according to one of claims 1 to 9, characterised in that the connecting fitting (20, 220) is formed as a single extruded part, more particularly as a one-piece plastics component, preferably of thermoplastic plastics.

11. Connecting fitting according to claim 10, characterised in that the extruded part consists of at least two materials adapted to the assembly and fixing conditions.

## Revendications

1. Raccord (20, 220) pour fixer sur un support de raccord (45) des tuyaux souples présentant des nervures extérieures, notamment des tuyaux souples ondulés (50), avec un corps de raccord (25, 225) pouvant être introduit dans une ouverture (47) du support de raccord (45), avec des éléments de fixation au support pour fixer le raccord (20, 220) sur le support de raccord (45), avec au moins une ouverture (21, 221) pour introduire ou faire passer le tuyau souple, avec des éléments d'engagement de tuyau souple pour fixer en position le tuyau souple dans le raccord (20, 220), les éléments de fixation au support étant réalisés sous la forme d'éléments élastiques et d'immobilisation (35, 235) à élasticité de ressort, dont la circonférence extérieure ou encore le diamètre extérieur peut être agrandi et qui sont disposés concentriquement autour de l'axe longitudinal ou axe de joint (33, 233), pour un assemblage par crantage ou enclenchement côté support, et les éléments d'engagement de tuyau souple étant réalisés sous la forme d'éléments d'assemblage par crantage ou enclenchement côté tuyau souple, et les éléments d'engagement de tuyau souple et/ou les éléments de fixation au support étant des éléments de blocage (40, 240) à élasticité de ressort, disposés concentriquement autour de l'axe longitudinal ou axe de joint (33, 233), qui sont pourvus de branches de blocage (55, 255) s'étendant environ dans la direction de l'axe longitudinal ou axe de joint (33, 233) et d'éléments d'engagement (60, 260 ; 70, 270) s'étendant radialement, de configuration adaptée aux conditions de réunion, et le corps de raccord (25, 225) étant pourvu du côté de montage d'un corps d'appui et d'application (27, 227) de préférence annulaire, **caractérisé** en ce que les éléments élastiques et d'immobilisation (35, 235) consistent chacun en une charnière triple, avec des parties intermédiaires (77, 277, 78, 278) d'élément élastique et d'immobilisation qui, lors de la fixation ou encore de l'immobilisation du raccord, peuvent pivoter autour des charnières avec agrandissement de la circonférence extérieure ou encore du diamètre extérieur des éléments élastiques et d'immobilisation (35, 235).

2. Raccord selon la revendication 1, **caractérisé** en ce que la charnière à trois articulations présente des charnières pelliculaires (72, 73, 74), et tant les charnières pelliculaires (72, 73, 74) que les parties (77, 277, 78, 278) d'élément élastique et d'immobilisation sont reliées monobloc à un corps d'appui (29) et au corps d'appui et d'application (27, 227).

3. Raccord selon la revendication 1 ou 2, **caractérisé** en ce qu'au moins une partie (77, 277, 78, 278) d'élément élastique et d'immobilisation est pourvue d'un élément d'immobilisation à élasticité de ressort, adapté à la configuration de bord d'orifice ou encore à l'épaisseur (46) du support de raccord (45).

4. Raccord selon une des revendications 1 à 3, **caractérisé** en ce qu'un ou plusieurs éléments d'appui à élasticité de ressort, s'étendant environ dans la direction de l'axe longitudinal ou axe de joint (33, 233) et disposés concentriquement autour de cet axe (33, 233), sont prévus dans la région du corps d'appui et d'application (27, 227), éléments sur lesquels peuvent se cranter les éléments d'engagement (60) côté support.

5. Raccord selon une des revendications 1 à 4, **caractérisé** en ce que les éléments de blocage (40, 240) consistent en des éléments d'engagement (70, 270) s'étendant radialement vers l'intérieur, de configuration adaptée aux nervures extérieures du tuyau souple.

6. Raccord selon une des revendications 1 à 5, **caractérisé** en ce que les éléments de blocage (40, 240) sont réalisés avec des éléments d'engagement (60, 260) côté support et avec des éléments d'engagement (70, 270) côté tuyau souple.

7. Raccord selon une des revendications 1 à 6, **caractérisé** en ce que les éléments d'engagement de tuyau souple sont conçus libérables.

8. Raccord selon une des revendications 1 à 7, **caractérisé** en ce que les éléments de fixation au support sont conçus libérables.

9. Raccord selon une des revendications 1 à 8, **caractérisé** en ce que les éléments de fixation au support consistent en des éléments de blocage (240) disposés concentriquement autour de l'axe longitudinal ou axe de joint (33, 233), avec un filetage extérieur (280) et un écrou (230) pouvant être vissé sur le filetage.

10. Raccord selon une des revendications 1 à 9, **caractérisé** en ce que le raccord (20, 220) est réalisé sous la forme d'une unique pièce moulée par injection, notamment d'une pièce en matière plastique monobloc, de préférence en matière thermoplastique.

11. Raccord selon la revendication 10, **caractérisé** en ce que la pièce moulée par injection est constituée d'au moins deux matériaux adaptés aux conditions de montage et de fixation.
